# EUROPÄISCHE PATENTSCHRIFT

(11) **EP 1 483 516 B1**
(45) Veröffentlichungstag und Bekanntmachung des Hinweises auf die Patenterteilung: **04.10.2006**
(21) Anmeldenummer: 02807028.2
(22) Anmeldetag: 18.11.2002
(51) Int. Cl.: F16F 1/10, A45D 27/46

(54) **LIFTMECHANISMUS FÜR EINE REINIGUNGSVORRICHTUNG EINES TROCKENRASIERAPPARATES**
LIFTING MECHANISM FOR THE CLEANING DEVICE OF A DRY RAZOR
MECANISME DE LEVAGE POUR UN DISPOSITIF DE NETTOYAGE D'UN RASOIR ELECTRIQUE

(30) Priorität: 08.03.2002 DE 10210351
(43) Veröffentlichungstag der Anmeldung: 08.12.2004
(73) Patentinhaber: Braun GmbH, 61476 Kronberg (DE)
(72) Erfinder: HÖSER, Jürgen, 61267 Neu Anspach (DE); KAPPES, Diana, 65817 Eppstein (DE); LARSCHEID, Andreas, 65770 Kelkheim-Fischbach (DE); LUDÄSCHER, Uwe, 65830 Kriftel (DE); KRUMNIKL, Svatopluk, 61476 Kronberg (DE)
(86) Internationale Anmeldenummer: PCT/EP2002/012887
(87) Internationale Veröffentlichungsnummer: WO 2003/076820

(56) Entgegenhaltungen:
- DE-C- 4 402 237
- US-A- 3 822 874

## Beschreibung

Ausgangspunkt der Erfindung ist eine Reinigungsvorrichtung für einen Trockenrasierapparat, umfassend einen Liftmechanismus mit einer Bodenplatte und einem Chassis, das zu der Bodenplatte verschiebbar angeordnet ist und mindestens einer dazwischen verspannten Feder.

Durch das unter dem Namen "Clean & Charge" vertriebene Gerät der Fa. Braun ist eine herkömmliche Reinigungsvorrichtung bekannt. Die Reinigungsvorrichtung weist ein Gehäuse auf, in das der Trockenrasierapparat zur Reinigung eingesetzt wird. Dabei wird der Scherkopf des Rasierapparates von einem Aufnahmeteil aufgenommen, welches als eine Reinigungswanne ausgebildet ist. Das Gehäuse beherbergt weiter einen Behälter, in dem sich eine Reinigungsflüssigkeit befindet. Die Reinigungsflüssigkeit wird zur Reinigung des Scherkopfes aus diesem Behälter in das Aufnahmeteil geleitet. Dort wird sie mit dem Scherkopf in Kontakt gebracht, um den im Scherkopf befindlichen Haarstaub herauszulösen. Von dem Aufnahmeteil fließt die Reinigungsflüssigkeit mit dem aufgenommenen Haarstaub in den Behälter zurück. Die grundsätzliche Arbeitsweise einer solchen Reinigungsvorrichtung ist z.B. aus der DE 44 02 237 C2 bekannt. Da die Wirkung der Reinigungsflüssigkeit mit der steigenden Anzahl an Reinigungsvorgängen nachläßt, ist es erforderlich, die Reinigungsflüssigkeit nach einer gewissen Anzahl von Reinigungsvorgängen gegen neue Reinigungsflüssigkeit zu ersetzen. Aus diesem Grund ist der Behälter für die Reinigungsflüssigkeit auswechselbar gestaltet. Zum Auswechseln des Behälters mit der Reinigungsflüssigkeit wird das Gehäuse der Reinigungsvorrichtung mittels eines Liftmechanismuses geöffnet, so daß der bisherige Behälter entnehmbar und gegen einen Behälter mit neuer Reinigungsflüssigkeit austauschbar ist. Hierzu ist die Reinigungsvorrichtung in eine Bodenplatte und ein Chassis unterteilt.

Das Chassis besteht aus einer Chassisplatte und dem eigentlichen Chassis. Die Bodenplatte besitzt Führungen für die Spiralfedern, wobei die Spiralfedern im geschlossenen Zustand der Reinigungsvorrichtung gegen die Chassisplatte vorgespannt sind. Über eine Taste an der Außenseite des Gehäuses wird die Verriegelung zwischen Chassis und Bodenplatte aufgehoben und der Liftmechanismus ausgelöst. Die drei Spiralfedern entspannen sich und heben so das Chassis an, wodurch der Behälter mit der Reinigungsflüssigkeit freigegeben wird und ausgewechselt werden kann. Nach erfolgter Auswechselung des Behälters wird das Chassis gegen die Bodenplatte gedrückt und gleichzeitig wieder verrastet. Mit der Abwärtsbewegung des Chassis werden die Spiralfedern gespannt. Infolge des großen Öffnungsweges des Gehäuses müssen die Spiralfedern einen großen Federweg aufweisen.

Gleichzeitig müssen die Spiralfedern das Chassis im geöffneten Zustand sicher halten. Dies erfordert relativ große Kräfte zum Schließen des Gehäuses und gleichzeitigem Spannen der Spiralfedern. Zudem wirken diese Kräfte auch im geschlossenen Zustand besonders stark, da die Spiralfedern eine progressive Federkennlinie besitzen. Dadurch wird die Struktur der Reinigungsvorrichtung erheblich belastet. Ein weiterer Nachteil ist der ruckartige Beginn und das abrupte Ende der Öffnungsbewegung an einem Anschlag, das mit einer lauten Geräuschentwicklung verbunden ist. Aufgrund des großen Federweges sind die Spiralfedern geführt. Beim Betätigen des Liftmechanismuses kommen die Spiralfedern mit den Führungen in Kontakt, was ebenfalls zu einer nicht unerheblichen Geräuschbelastung führt. Diese Kratzgeräusche werden vom Benutzer der Reinigungsvorrichtung nachteilig empfunden. Letztendlich stören die Spiralfedern aufgrund ihrer sichtbaren Anordnung das Erscheinungsbild der Reinigungsvorrichtung.

Der vorliegenden Erfindung liegt daher die Aufgabe zugrunde, eine Reinigungsvorrichtung mit einem möglichst gleichmäßig arbeitenden Liftmechanismus zu schaffen, der bei einfachem Aufbau eine möglichst geringe Geräuschentwicklung aufweist und eine geringe Belastung der Struktur der Reinigungsvorrichtung bewirkt.

Die Aufgabe wird erfindungsgemäß dadurch gelöst, daß die Feder eine Rollbandfeder ist. Die Rollbandfeder verspannt das Chassis gegen die Bodenplatte. Im geschlossenen Zustand der Reinigungsvorrichtung ist die Rollbandfeder abgerollt. Beim Auslösen des Liftmechanismuses wird das Chassis freigegeben und von der sich entspannenden und sich dabei aufrollenden Rollbandfeder bewegt. Der Vorteil der aus Bandstahl bestehenden Rollbandfeder ist deren nahezu lineare Federkennlinie und die nahezu geräuschfreie Arbeitsweise. Zudem treten infolge der Rollbewegung sowohl beim Auf- als auch beim Abrollen keine schlagartigen Berührungen mit anderen Bauteilen oder mit sich selbst auf, sondern bewirkt ein Anheben des Chassis mit weitgehend gleichmäßiger Geschwindigkeit über die gesamte Hubstrecke. Dadurch ermöglicht die Rollbandfeder einen wesentlich leiseren Liftmechanismus. Zudem wird das Chassis durch die Rollbandfeder geringer belastet, so daß die Konstruktion weniger starken Beanspruchungen standhalten muß. Ein weiterer Vorteil besteht darin, daß die sich beim Öffnen der Reinigungsvorrichtung aufrollende Rollbandfeder für den Benutzer durch eine geeignete Anordnung nicht sichtbar ist. Daher kann auf eine zusätzliche Oberflächenbehandlung der Rollbandfeder oder deren Kapselung zur Verbesserung des optischen Erscheinungsbildes, verzichtet werden.

In vorteilhafter Weise besitzt die Bodenplatte mindestens eine Führung, die die Bewegung des Chassis unterstützt. Neben einer zentral auf der Bodenplatte angeordneten Führung sind auch mehrere Führungen am Umfang der Bodenplatte denkbar. Die Anordnung der Führungen am Umfang hat den Vorteil, daß im Zentrum der Bodenplatte ausreichend Platz für den Reinigungsflüssigkeitsbehälter und andere Einbauten zur Verfügung steht. Ein Verkanten der Chassisplatte wird vermieden, wenn am Chassis Führungsbuchsen angeordnet sind, die eine große Führungslänge aufweisen.

Diese Führung kann gleichzeitig als Führung für eine oder mehrere Rollbandfedern ausgebildet sein. Als vorteilhaft hat sich hierbei die Verwendung von zwei Rollbandfedern je Führung, sogenannte Doppelrollbandfedern erwiesen. Die Anordnung zweier Rollbandfedern gestattet die Verwendung kleiner Federn. Der entscheidende Vorteil besteht jedoch in der nunmehr möglichen symmetrischen Anordnung der Rollbandfedern an einer Führung, wodurch die Gefahr des Verkantens des Chassis während der Öffnungsbewegung weitgehend ausgeschlossen ist.

Als günstig hat sich die einstückige Ausbildung zweier Rollbandfedern (Doppelrollbandfeder) erwiesen. In dieser Ausbildung ist jedes Ende eines U-förmigen Bandstahls als Rollbandfeder ausgebildet, wobei sich die beiden Federn nach außen auf- bzw. abrollen. Auf diese Weise lassen sich beide Rollbandfedern mit einer Befestigung an der Führung anordnen. Dadurch wird die Anzahl der Einzelteile reduziert und gleichzeitig die Montage vereinfacht. Die Befestigung der Rollbandfedern an der Führung kann sowohl durch Kraft- als auch durch Formschluß, z.B. durch Schrauben, Klipse oder Nieten, erfolgen.

In einer weiteren Ausgestaltung weist der Liftmechanismus Mittel auf, die die Bewegung des Chassis beim Öffnen der Reinigungsvorrichtung bis zum Erreichen der Endstellung abbremsen. Der entscheidende Vorteil dieser Ausgestaltung besteht darin, daß die Öffnungsbewegung keinerlei Geräusche verursacht, da ein hartes Anschlagen des Chassis an einem die Öffnungsbewegung begrenzenden Anschlag vermieden wird. Zudem wird durch den gebremsten Liftmechanismus der Verschleiß verringert.

Die Mittel für den gebremsten Liftmechanismus sind elastische Elemente, die entweder an der Führung, der Bodenplatte oder am Chassis angeordnet sind. Die elastischen Elemente können Federn, Gummi-, Schaumstoff- oder andere Kunststoffteile sein, die gegen einen Anschlag bewegt werden. Hierbei haben sich Federn vorteilhaft erwiesen, da sie ein Abbremsen des Liftmechanismuses über einen relativ langen Weg erlauben. Der Anschlag kann sowohl an dem Chassis als auch an den Führungen, vorzugsweise an dem der Bodenplatte abgewandten Ende, angeordnet sein. Eine einfache Montage wird erreicht, wenn der Anschlag oder die Feder zusammen mit der Rollbandfeder an der Führung befestigt ist. Als besonders günstig hat sich hierbei die Verwendung von Federklipsen erwiesen. Diese Klipse ermöglichen zum einen das Befestigen der Rollbandfedern und bilden zum anderen eine oder mehrere Federn, welche die Öffnungsbewegung der Chassisplatte kurz vor Erreichen der Endlage abbremsen.

In einer weiteren Ausgestaltung der Federklipse sind die Federn Biegefedern, die mit jeweils einer am Chassis angeordneten Rampe zusammenwirken. Durch gezielte Wahl der Neigung der Rampe lassen sich die unterschiedlichsten Abbremscharakteristiken einstellen. So führt eine geringe Neigung der Rampe zu einem langsamen Verzögern der Öffnungsbewegung, während mit einer starken Neigung der Rampe eine schnelle Verzögerung erreicht wird. Durch eine Veränderung der Neigung über den zurückzulegenden Weg lassen sich Kombinationen beider Verzögerungen erreichen. So ist es denkbar, zuerst eine geringe Neigung an der Rampe vorzusehen, die zu einer nur langsamen Verzögerung der Öffnungsbewegung führt. Mit weiterer Annäherung der Chassisplatte an die Endlage erhöht sich die Neigung der Rampe, was zu einer immer größer werdenden Abbremsung der Öffnungsbewegung bis zum Stillstand führt. Durch gezielte Gestaltung der Rampe kann so die Endlage definiert eingestellt werden. In diesem Fall ist kein zusätzlicher Anschlag für den Liftmechanismus notwendig.

Weitere Ziele, Merkmale, Vorteile und Anwendungsmöglichkeiten der vorliegenden Erfindung ergeben sich aus der nachfolgenden Beschreibung der Ausführungsbeispiele. Dabei bilden alle beschriebenen oder bildlich dargestellten Merkmale für sich oder in beliebiger Kombination den Gegenstand vorliegender Erfindung, auch unabhängig von ihrer Zusammenfassung in den Ansprüchen oder deren Rückbeziehung.

An einem Ausführungsbeispiel wird die Erfindung näher erläutert. Dabei zeigen
- Fig. 1: eine schematische Darstellung der Reinigungsvorrichtung,
- Fig. 2: eine Explosionsdarstellung des Liftmechanismuses der Reinigungsvorrichtung,
- Fig. 3: eine perspektivische Darstellung des Liftmechanismuses im eingefahrenen Zustand,
- Fig. 4: eine Seitenansicht des Liftmechanismuses im geöffneten Zustand und
- Fig. 5: eine Seitenansicht der Führung aus Fig. 4.

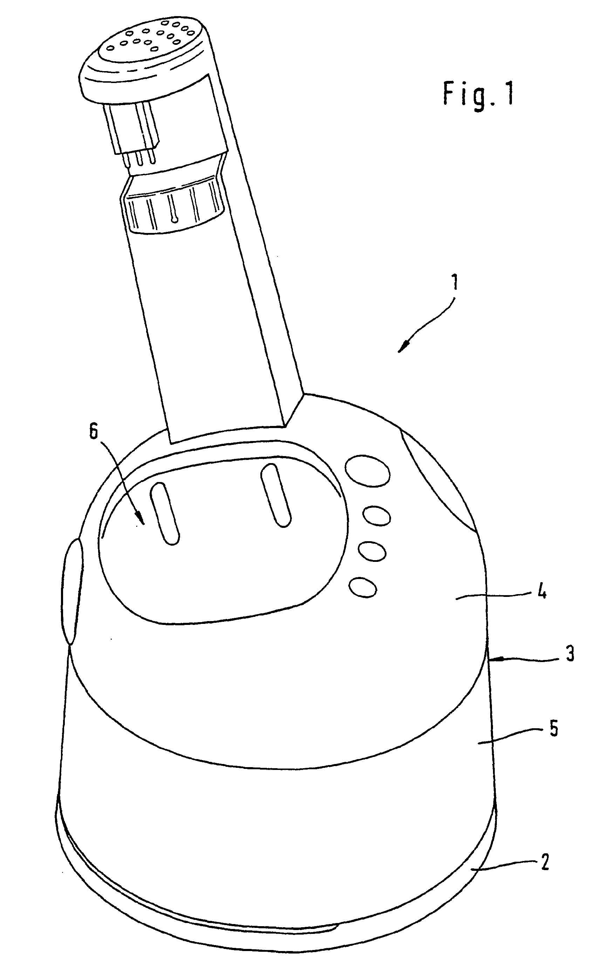

Die in Fig. 1 dargestellte Reinigungsvorrichtung 1 besteht aus einer Bodenplatte 2 und einem Chassis 3. Das Chassis 3 setzt sich aus zwei Gehäuseteilen 4, 5 zusammen. In eine Öffnung 6 ist ein nicht dargestellter Trockenrasierapparat mit seinem Scherkopf einsetzbar. Unter dem Chassis 3 sind die zur Reinigung des Trockenrasierapparates notwendigen Einrichtungen, wie der Behälter und die Pumpe für die Reinigungsflüssigkeit und der Liftmechanismus angeordnet.

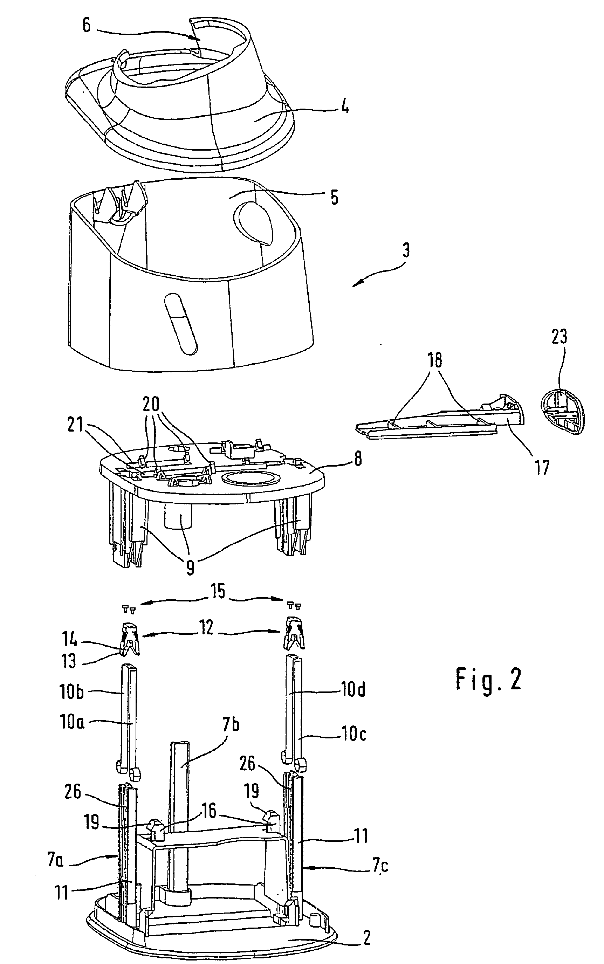

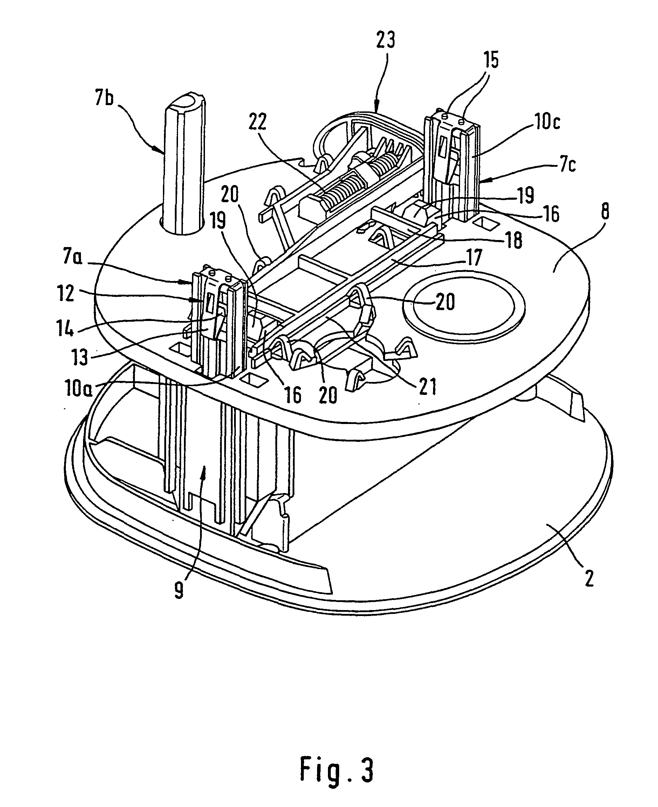

Der in Fig. 2 näher dargestellte Liftmechanismus umfaßt die Bodenplatte 2, von der sich drei Führungen 7a-c nach oben erstrecken. Entlang der Führungen 7a-c ist eine Chassisplatte 8 verschiebbar angeordnet. Um ein Verkanten der Chassisplatte 8 zu vermeiden, besitzt die Chassisplatte 8 drei Führungsbuchsen 9. Die Chassisplatte 8 trägt die Gehäuseteile 4, 5 des Chassis 3. An den Führungen 7a, 7c sind jeweils zwei Rollbandfedern 10a-d angeordnet, die sich entlang einer Führungsbahn 11 auf- und abrollen können. Jeweils zwei U-förmig gebogene Doppelrollbandfedern 10a,b; 10c,d sind einstückig miteinander verbunden und am oberen Ende der jeweiligen Führung 7a, 7c zusammen mit je einem Federklips 12 durch je zwei Schrauben 15 befestigt. Die Federklipse 12 besitzen zwei seitlich angeordnete Ausleger 13, deren nach innen gebogene Zungen 14 sich aneinander abstützen. Dazu besitzen die Führungen 7a, 7c in dieser Höhe je eine Ausnehmung 26. Die Abstützung der Zungen 14 kann auch an entsprechenden Flächen der Führungen 7a, 7c erfolgen. An der Bodenplatte 2 sind auf einer Brücke zwei Rasthaken 16 angeordnet, die mit einem Rastschieber 17 zusammenwirken, um das Chassis 3 im eingefahrenen Zustand des Liftmechanismuses an der Bodenplatte 8 zu verrasten. Der Rastschieber 17 weist mehrere Raststege 18 auf, die in die Rasthaken 16 eingreifen. Zur Verbindung des Rastschiebers 17 mit der Chassisplatte 8 sind an deren Oberseite Haken 20 angeordnet. Zwischen den Haken 20 angeordnete Formelemente 21 bilden eine Führung für den Rastschieber 17. Eine ebenfalls auf der Chassisplatte 8 befestigte Rückstellfeder 22 (Figur 3) bewirkt das Bewegen des Rastschiebers 17 in eine vorgegebene Ausgangslage.

Fig. 3 zeigt die Chassisplatte 8 im eingefahrenen Zustand, wenn sie an der Bodenplatte 2 arretiert ist. In diesem Zustand hintergreifen die Raststege 18 die Rasthaken 16. Die Rollbandfedern 10 sind mit den Federklipsen 12 an den Führungen 7a, 7c verrastet oder verschraubt. Bei verrasteter Chassisplatte 8 sind die Rollbandfedern 10 durch das Abrollen gespannt. Die Enden der Rollbandfedern 10 sind innerhalb der Führungsbuchsen 9 angeordnet. Durch Drücken des Betätigungselementes 23 wird der Rastschieber 17 entlang der Formelemente 21 gegen die Rückstellfeder 22 verschoben. Mit dieser Verschiebung sind die Raststege 18 nicht mehr mit den Rasthaken 16 im Eingriff, so daß die Chassisplatte 8 infolge des Liftmechanismuses entlang der Führungen 7a-c nach oben bewegt wird. Nach dem Loslassen des Betätigungselementes 23 wird der Rastschieber 17 durch die Rückstellfeder 22 in seine Ausgangslage bewegt. Die Aufwärtsbewegung der Chassisplatte 8 wird durch die Rollbandfedern 10 bewirkt. Die Reinigungsvorrichtung 1 ist damit geöffnet. Zum Schließen der Reinigungsvorrichtung 1 wird das Chassis 3 und damit die Chassisplatte 8 manuell nach unten bewegt. Die Raststege 18 des Rastschiebers 17 laufen bei der Abwärtsbewegung der Chassisplatte 8 auf die Rasthaken 16 auf. Seitliche Abschrägungen 19 an der Oberseite der Rasthaken 16 bewirken ein Verschieben des Rastschiebers 17 gegen die Rückstellfeder 22, wenn sich die Chassisplatte 8 weiter nach unten bewegt. Ist die Chassisplatte 8 soweit nach unten verschoben worden, daß sich die Raststege 18 unterhalb der Rasthaken 16 befinden, wird der Rastschieber 17 durch die Rückstellfeder 22 in seine Ausgangslage verschoben, wobei die Raststege 18 die Rasthaken 16 hintergreifen. Die Chassisplatte 8 ist damit wieder an der Bodenplatte 2 verrastet und die Reinigungsvorrichtung 1 ist geschlossen. Das hörbare Verrasten infolge des durch die Rückstellfeder 22 bewirkten Anschlagens der Raststege 18 an den Rasthaken 16 ist gleichzeitig eine akustische Information für den Benutzer der Reinigungsvorrichtung 1, daß der Liftmechanismus verrastet und die Reinigungsvorrichtung geschlossen ist.

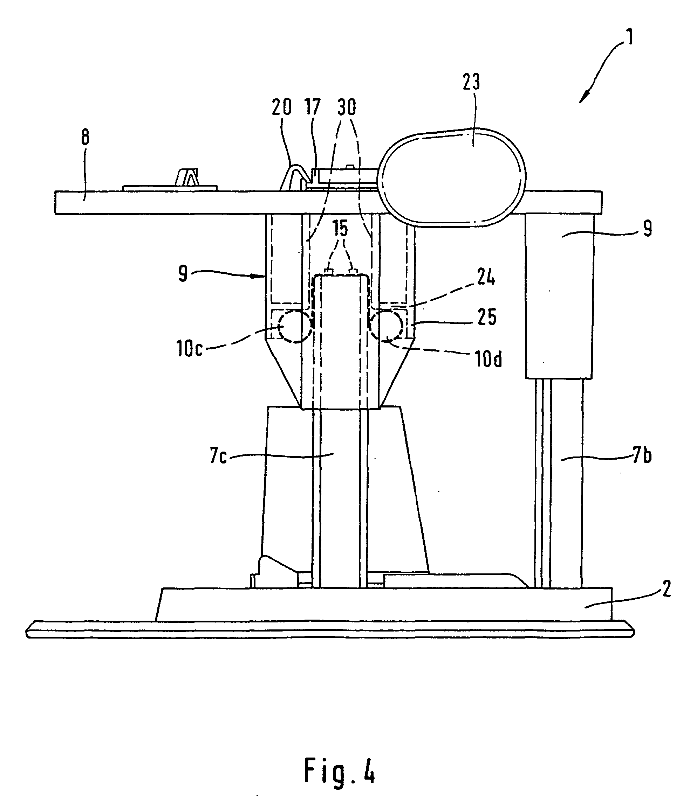

Die geöffnete Reinigungsvorrichtung 1 ist in Fig. 4 dargestellt. An der Chassisplatte 8 angeformte Führungsbuchsen 9 nehmen die Führungen 7 der Bodenplatte 2 auf. Mittels entsprechenden Verrastungen und/oder mit Schrauben 15 sind ein Federklips 12 und die Rollbandfedern 10c, 10d an der Führung 7c befestigt. Die beiden Rollbandfedern 10c, 10d sind U-förmig gebogen und umfassen die Führung 7c. Die gerollten Enden der Rollbandfedern 10c, 10d liegen an je einem Anschlag 24 der Führungsbuchse 9 an und verspannen so die Chassisplatte 8 mit der Bodenplatte 2. In der dargestellten Endlage sind die Rollbandfedern 10 nicht vollkommen entspannt, sondern besitzen eine ausreichende Vorspannung, um die Chassisplatte 8 zuverlässig in der Endlage zu halten. Die Führungsbuchse besitzt zwei Blenden 25, die vor den aufgerollten Enden der Rollbandfedern 10 angeordnet sind. Diese Blenden 25 schützen die Rollbandfedern und bilden außerdem einen Sichtschutz, so daß die Rollbandfedern 10 im geöffneten Zustand der Reinigungsvorrichtung 1 für den Benutzer nicht sichtbar sind. Beim Schließen der Reinigungsvorrichtung 1 werden die aufgerollten Enden der Rollbandfedern 10 von den Anschlägen 24 nach unten gedrückt, wodurch sich die Enden abrollen. Dadurch werden die Rollbandfedern 10 gespannt. Die Rollbandfedern 10 sind so ausgebildet, daß die Enden im geschlossenen Zustand, also wie in Fig. 3 dargestellt, gerollt sind, um einen zuverlässigen Kontakt mit den Anschlägen 24 zu gewährleisten.

Beim Betätigen des Liftmechanismuses gleiten die Führungsbuchsen 9 mit Laufflächen 30 auf den Rollfedern 10.

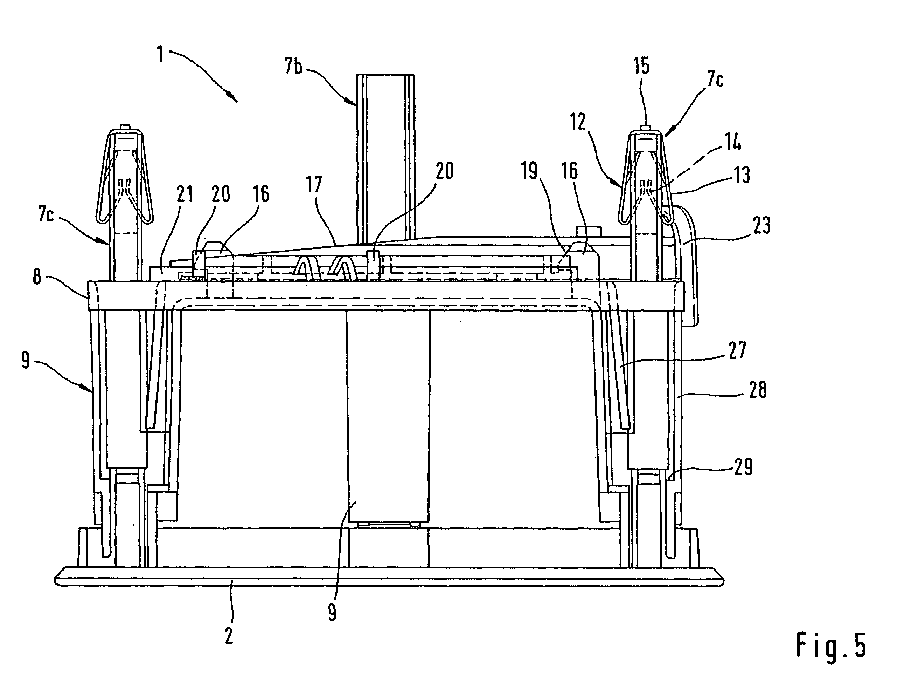

Fig. 5 zeigt die Führung in geschlossenem Zustand im Schnitt. In dieser Darstellung ist die Chassiplatte 8 an der Bodenplatte 2 arretiert. Der mit der Führung 7c verbundene Federklips 12 besitzt zwei seitliche Ausleger 13 mit nach innen gebogenen Enden 14, die in die Ausnehmung 26 der Führung 7c hineinragen. In der Führungsbuchse 9 ist eine Rampe 27 angeordnet. Die Rampe 27 ist derart angeordnet, daß ihr Abstand zur Führung 7c von oben nach unten geringer wird. Der Rampe 27 gegenüberliegend, besitzt die Führungsbuchse 9 eine parallel zur Führung 7c verlaufende Begrenzung 28. Am unteren Ende weist die Begrenzung 28 eine nach innen gerichtete Stufe 29 auf. Nachfolgend wird die Dämpfung des Liftmechanismuses kurz vor Erreichen der Endlage beschrieben.

Beim Bewegen der Chassisplatte 8 nach oben trifft die Rampe 27 auf den Ausleger 13. Bei Fortsetzung dieser Bewegung wird der Ausleger 13 nach innen gebogen. Das Ende 14 wird ebenso nach innen gelenkt, bis es auf das gegenüberliegende Ende 14 trifft und dieses gegen die Begrenzung 28 der Führungsbuchse 9 drückt. Aufgrund dieser elastischen Verformungen des Federklipses 12 wird die Aufwärtsbewegung des Liftmechanismuses gebremst. Durch geeignete Gestaltung der Rampe und des Federklipses 12 läßt sich das Abbremsen des Liftmechanismuses und die Endlage der Chassisplatte 8 in weiten Grenzen beliebig einstellen. So ist es denkbar, die Begrenzung 28 ebenfalls als Rampe auszuführen. Im vorliegenden Fall wird die Endlage durch Formschluß erzeugt, wenn die in der Führung 9 ausgebildete Stufe 29 auf den rechten Ausleger 13 des Federklipses 12 trifft.

## Patentansprüche

1. Reinigungsvorrichtung für einen Trockenrasierapparat umfassend einen Liftmechanismus mit einer Bodenplatte (2), einem Chassis (3,8), das zu der Bodenplatte (2) verschiebbar angeordnet ist und mindestens einer zwischen der Bodenptatte (2) und dem Chassis (3,8) verspannten Feder, **dadurch gekennzeichnet, daß** die Feder eine Rollbandfeder (10) ist.

2. Reinigungsvorrichtung nach Anspruch 1, **dadurch gekennzeichnet, daß** die Bodenplatte (2) mindestens eine Führung (7, 11) für das Chassis (3, 8) und/oder die Rollbandfeder (10) aufweist.

3. Reinigungsvorrichtung nach Anspruch 1 und 2, **dadurch gekennzeichnet, daß** die Rollbandfeder (10) an der Führung (7), vorzugsweise an dem der Bodenplatte (2) abgewandten Ende, befestigt ist.

4. Reinigungsvorrichtung nach zumindest einem der Ansprüche 1 bis 3, **dadurch gekennzeichnet, daß** die Rollbandfeder (10) kraft- oder formschlüssig, vorzugsweise mit mindestens einer Schraube (15), Niete und/oder einem Federklips (12) befestigt ist.

5. Reinigungsvorrichtung nach zumindest einem der Ansprüche 1 bis 4, **dadurch gekennzeichnet, daß** zwei Rollbandfedern (10a, 10b; 10c, 10d) einteilig miteinander verbunden sind.

6. Reinigungsvorrichtung nach zumindest einem der Ansprüche 1 bis 5, **dadurch gekennzeichnet, daß** das Chassis (3, 8) mindestens eine Führungsbuchse (9) besitzt.

7. Reinigungsvorrichtung nach zumindest einem der Ansprüche 1 bis 6, **dadurch gekennzeichnet, daß** ein Anschlag (29) zum Begrenzen der Bewegung des Chassis (3, 8) angeordnet ist.

8. Reinigungsvorrichtung nach zumindest einem der Ansprüche 1 bis 7, **dadurch gekennzeichnet, daß** Mittel (12, 27, 28) zum Abbremsen der Bewegung des Chassis (3, 8) angeordnet sind.

9. Reinigungsvorrichtung nach Anspruch 8, **dadurch gekennzeichnet, daß** die Mittel mindestens ein elastisches Element (12) und mindestens ein Gegenstück (27, 28) umfassen.

10. Reinigungsvorrichtung nach Anspruch 9, **dadurch gekennzeichnet, daß** das elastische Element eine Feder oder ein Federklips (12) ist.

11. Reinigungsvorrichtung nach Anspruch 9, **dadurch gekennzeichnet, daß** das Gegenstück eine Rampe (27) ist.

12. Reinigungsvorrichtung nach Anspruch 11, **dadurch gekennzeichnet, daß** die Neigung der Rampe (27) konstant oder veränderlich ist.

13. Reinigungsvorrichtung nach zumindest einem der Ansprüche 1 bis 11, **dadurch gekennzeichnet, daß** das elastische Element (12) an der Führung (7) oder dem Chassis (3, 8) und das Gegenstück (27) am jeweils anderen Bauteil (7, 8) angeordnet ist.

14. Reinigungsvorrichtung nach zumindest einem der Ansprüche 1 bis 13, **dadurch gekennzeichnet, daß** das Chassis (3, 8) an der Bodenplatte (2) verrastbar ist.

## Claims

1. A cleaning device for a dry shaving apparatus, comprising a lift mechanism with a base plate (2), a chassis (3, 8) arranged for displacement relative to the base plate (2), and at least one spring secured in tension between the base plate (2) and the chassis (3, 8), **characterized in that** the spring is a coiled-strip spring (10).

2. The cleaning device as claimed in claim 1, **characterized in that** the base plate (2) has at least one guide (7, 11) for the chassis (3, 8) and/or the coiled-strip spring (10).

3. The cleaning device as claimed in claim 1 and 2, **characterized in that** the coiled-strip spring (10) is secured to the guide (7), preferably at the end remote from the base plate (2).

4. The cleaning device as claimed in at least one of the claims 1 to 3, **characterized in that** fastening of the coiled-strip spring (10) to the guide is by frictional or positive engagement, using preferably at least a screw (15), a rivet and/or a spring clip (12).

5. The cleaning device as claimed in at least one of the claims 1 to 4, **characterized in that** two coiled-strip springs (10a, 10b; 10c, 10d) are integrally connected with each other.

6. The cleaning device as claimed in at least one of the claims 1 to 5, **characterized in that** the chassis (3, 8) has at least one guide bushing (9).

7. The cleaning device as claimed in at least one of the claims 1 to 6, **characterized in that** provision is made for a stop (29) for limiting the movement of the chassis (3, 8).

8. The cleaning device as claimed in at least one of the claims 1 to 7, **characterized in that** provision is made for elements (12, 27, 28) for decelerating the movement of the chassis (3, 8).

9. The cleaning device as claimed in claim 8, **characterized in that** said elements comprise at least one elastic element (12) and at least one counterpart (27, 28).

10. The cleaning device as claimed in claim 9, **characterized in that** said elastic element is a spring or a spring clip (12).

11. The cleaning device as claimed in claim 9, **characterized in that** said counterpart is a ramp (27).

12. The cleaning device as claimed in claim 11, **characterized in that** the incline of the ramp (27) is constant or variable.

13. The cleaning device as claimed in at least one of the claims 1 to 11, **characterized in that** said elastic element (12) is arranged on the guide (7) or the chassis (3, 8) while said counterpart (27) is arranged on the respective other component (7, 8).

14. The cleaning device as claimed in at least one of the claims 1 to 13, **characterized in that** said chassis (3, 8) is adapted to lock onto the base plate (3, 8).

## Revendications

1. Dispositif de nettoyage pour un appareil de rasage à sec, comprenant un mécanisme de levage avec une plaque de base (2), un châssis (3, 8) disposé de manière à pouvoir coulisser vers la plaque de base (2), et au moins un ressort tenu entre la plaque de base (2) et le châssis (3, 8), **caractérisé en ce que** le ressort est un ressort à ruban de roulement (10).

2. Dispositif de nettoyage selon la revendication 1, **caractérisé en ce que** la plaque de base (2) comporte au moins une glissière (7, 11) pour le châssis (3, 8) et/ou le ressort à ruban de roulement (10).

3. Dispositif de nettoyage selon les revendications 1 et 2, **caractérisé en ce que** le ressort à ruban de roulement (10) est fixé sur la glissière (7), préférentiellement à l'extrémité opposée à la plaque de base (2).

4. Dispositif de nettoyage selon l'une des revendications 1 à 3 au moins, **caractérisé en ce que** le ressort à ruban de roulement (10) est fixé sous l'effet d'une force ou par engagement positif, préférentiellement par au moins une vis (15), un rivet et/ou un clip élastique (12).

5. Dispositif de nettoyage selon l'une des revendications 1 à 4 au moins, **caractérisé en ce que** deux ressorts à ruban de roulement (10a, 10b ; 10c, 10d) sont raccordés en une seule pièce.

6. Dispositif de nettoyage selon l'une des revendications 1 à 5 au moins, **caractérisé en ce que** le châssis (3, 8) comporte au moins une douille de guidage (9).

7. Dispositif de nettoyage selon l'une des revendications 1 à 6 au moins, **caractérisé en ce qu'**une butée (29) est disposée pour limiter le mouvement du châssis (3, 8).

8. Dispositif de nettoyage selon l'une des revendications 1 à 7 au moins, **caractérisé en ce que** des moyens (12, 27, 28) sont présentés pour le freinage du mouvement du châssis (3, 8).

9. Dispositif de nettoyage selon la revendication 8, **caractérisé en ce que** les moyens comprennent au moins un élément élastique (12) et au moins une pièce de butée (27, 28).

10. Dispositif de nettoyage selon la revendication 9, **caractérisé en ce que** l'élément élastique est un ressort ou un clip élastique (12).

11. Dispositif de nettoyage selon la revendication 9, **caractérisé en ce que** la pièce de butée est une rampe (27).

12. Dispositif de nettoyage selon la revendication 11, **caractérisé en ce que** l'inclinaison de la rampe (27) est constante ou variable.

13. Dispositif de nettoyage selon l'une des revendications 1 à 11 au moins, **caractérisé en ce que** l'élément élastique (12) est disposé contre la glissière (7) ou le châssis (3, 8), et la pièce de butée (27) contre l'autre composant correspondant (7, 8).

14. Dispositif de nettoyage selon l'une des revendications 1 à 13 au moins, **caractérisé en ce que** le châssis (3, 8) est enclenchable sur la plaque de base (2).
